(19) Europäisches Patentamt

European Patent Office

Office européen des brevets

(11) **EP 1 120 637 A2**

(12) **EUROPEAN PATENT APPLICATION**

(43) Date of publication:
01.08.2001 Bulletin 2001/31

(51) Int Cl.⁷: **G01J 3/18**

(21) Application number: 01101369.5

(22) Date of filing: 22.01.2001

(84) Designated Contracting States:
**AT BE CH CY DE DK ES FI FR GB GR IE IT LI LU MC NL PT SE TR**
Designated Extension States:
**AL LT LV MK RO SI**

(30) Priority: 26.01.2000 JP 2000017432

(71) Applicant: **Ando Electric Co., Ltd.**
**Kawasaki-shi, Kanagawa (JP)**

(72) Inventor: **Kojima, Manabu,**
**c/o Ando Electric Co., Ltd.**
**Kawasaki-shi, Kanagawa (JP)**

(74) Representative: **Grünecker, Kinkeldey,**
**Stockmair & Schwanhäusser Anwaltssozietät**
**Maximilianstrasse 58**
**80538 München (DE)**

(54) **Method and means for calibrating a grating monochromator**

(57) The reference light is entered into the monochromator 4, and by using the diffraction light of the different order from the diffraction order to measure the measured light, the wavelength of the reference light is measured, and the difference between the measured wavelength and the wavelength corresponding to the diffraction order of the reference light is found, and when there is a deviation in the absorption wavelength, the rotation angle of the diffraction grating 14 is corrected by an angle corresponding to the deviated wavelength, and the wavelength is calibrated.

## FIG. 1

EP 1 120 637 A2

## Description

BACKGROUND OF THE INVENTION

1. Field of the Invention

The present invention relates to a wavelength calibration method of a monochromator, a wavelength measuring method and an wavelength measuring apparatus.

2. Description of the Related Art

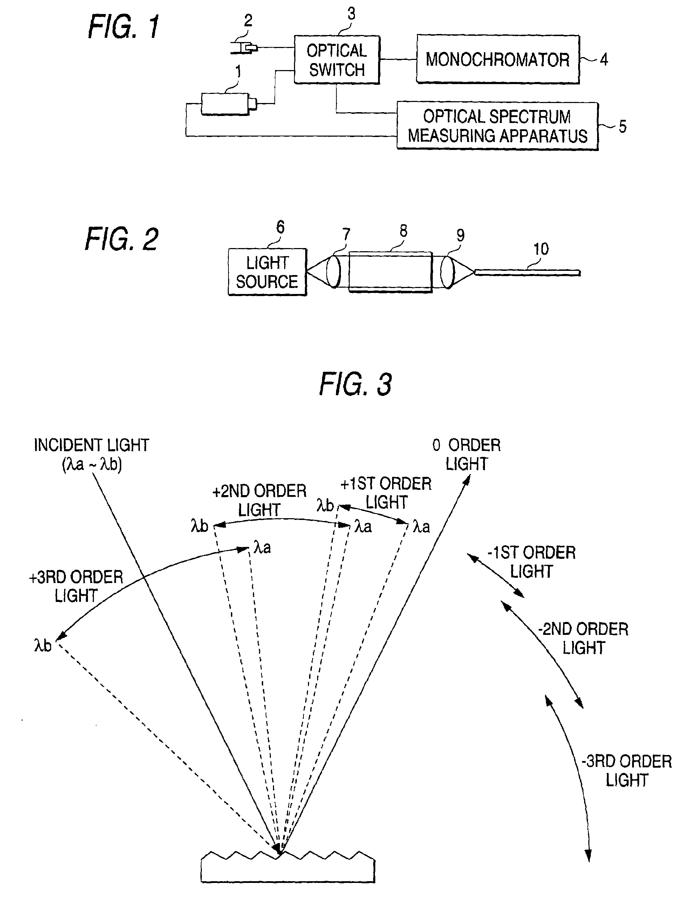

A conventional wavelength calibration of a monochromator will be described below with a structure shown in Fig. 1 and Fig. 2 as an example. A conventional wavelength mesuring apparatus comprises a reference light source 1 to emit a reference light beam of a predetermined wavelength, a measured light incident end 2 into which a measured light beam enters, an optical switch 3 into which the measured light beam and the reference light beam are incident, and from an emitting end of which either one of the measured light beam or the reference light beam is emitted, a monochromator 4 for rotating the diffraction grating to an angle corresponding to the wavelength of a detection light beam, and detecting a light beam having a specific wavelength, and an optical spectrum measuring apparatus 5 for controlling the optical switch 3 and the rotation angle of the diffraction grating in the monochromator 4, and measuring a spectrum of the light beam.

A wavelength calibration method of the monochromator using the above structure will be described below. Fig. 2 shows the reference light source 1. The reference light source 1 is structured such that: a light beam having a predetermined wavelength band and emitted from the light source is converted into a parallel light beam by a lens 7, and the parallel light beam enters into a gas absorption cell 8, and the light penetrated through the gas absorption cell 8 is converged by a lens 9.

The gas absorption cell 8 is filled with a gas having a characteristic to absorb only a specific wavelength component, and the gas absorbes the specific wavelength component of the incident light beam. The wavelength absorbed is known and defined as a reference wavelength of the reference light.

The emitted light from the reference light source 1 is entered into the monochromator 4, and the optical spectrum analysis is conducted by the optical spectrum measuring apparatus 5 to detect the absorption wavelength. In the case, in the monochromator 4, the diffraction grating is rotated in the vicinity of the angle corresponding to the absorption wavelength to detect the wavelength.

That is, the first order light is detected. Then, the detected wavelength and the known reference wavelength are compared. Using the difference therebetween, wavelength calibration of the monochromator is performed.

It is important that the wavelength of the light beam detected by the monochromator is correctly detected to the incident wavelength. To this, the wavelength calibration using the reference light source is effective.

However, factors to generate the wavelength measurement error of the monochromator are ranging over various factors, and it is not always true that the uniform wavelength error is generated over the wide wavelength band.

That is, the amount of error changes depending on the measuring wavelength.

However, the absorption wavelength that can be used is limited because the sort of gas which can be filled in the inside of the gas absorption cell is limited. Accordingly, there is a problem that the wavelength calibration of the monochromator cannot be performed using various sorts of wavelength.

SUMMARY OF THE INVENTION

The present invention has been made to solve the aforementioned problem, and an object of the invention is to provide a wavelength measuring appratus or method that can perform a wavelength calibration of the monochromator using various wavelengths.

According to the invention, there is provided a wavelength measuring apparatus comprising:

a reference light source 1 to emit a reference light beam having a predetermined wavelength;
a measured light incident end 2 into which a measured light beam enters;
an optical switch 3 into which the measured light beam and the reference light beam are entered, and from light emission end of which either one of the measured light beam or the reference light beam is emitted;
a monochromator 4 which rotates the diffraction grating to an angle corresponding to the wavelength of the detection light, and detects the light of the specific wavelength; and
an optical spectrum measuring apparatus 5 which controls the optical switch and the rotation angle of the diffraction grating in the monochromator, and measures the spectrum of the light beam, and by the optical spectrum measuring apparatus 5, the wavelength of the reference light beam is measured by using the diffraction light of the different order from the diffraction order to measure the measured light beam. It is characterized in that, by using a difference between the measurement wavelength and the wavelength corresponding to the diffraction order of the reference light, which is known, the wavelength of the monochromator 4 is calibrated, and a higher order light beam of the diffraction grating which appears in the angle corresponding to the integer time values is measured. It is characterized in that, by using the difference between the measured wavelength and the absorption wavelength of the known reference light source, the wavelength of the monochromator 4 is calibrated.

BRIEF DESCRIPTION OF THE DRAWINGS

Fig. 1 is a block diagram showing a outline structure of wavelength calibration according to an embodiment of the present invention.

Fig. 2 is a view showing a structure of a reference light source 1.

Fig. 3 is a view relating to diffraction orders of a diffraction grating.

Fig. 4 is a view showing a structure of a monochromator.

Fig. 5 is a view showing an example of a situation in which a light beam is separated into its spectral components by the diffraction grating.

Fig. 6 is a table showing an example relating to a gas filled in a cell and an absorption wavelength.

Fig. 7 is a structural view of an optical spectrum measuring apparatus.

DETAILED DESCRIPTION OF THE PRESENT INVENTION

The present invention will be described with reference to the accompanying drawings.

An output wavelength of a monochromator using a diffraction grating is determined by the following relational expression.

$$m\lambda = .2d \cos (\theta o/2) \cdot \sin \theta$$

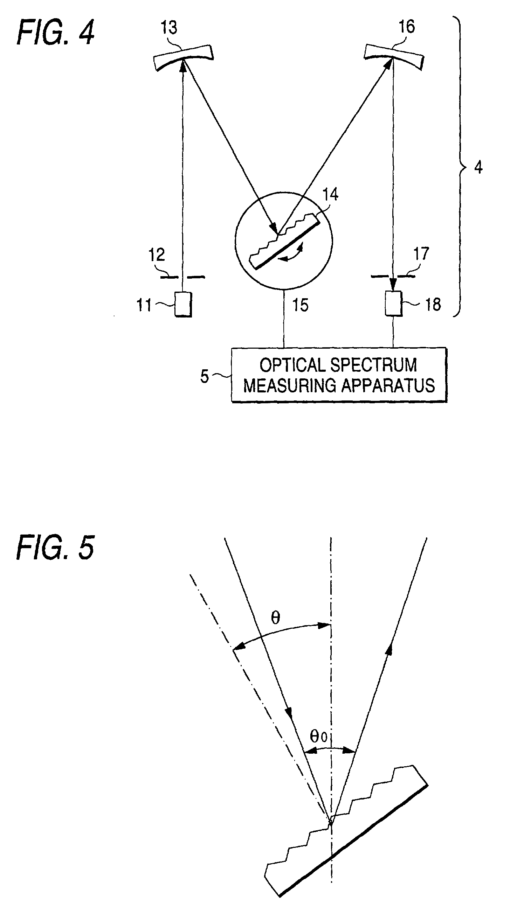

Herein, m is the diffraction order ($\pm 1$, $\pm 2$, $\pm 3$, $\pm 4$, ...), $\lambda$ is the wavelength, d is the groove interval of the diffraction grating, $\theta o$ is the angle formed between the incident angle and the reflection angle, and $\theta$ is the rotation angle (an angle formed between a normal line of the diffraction grating and the incident angle and the reflection angle) of the diffraction grating. Refer to Fig. 5.

As can be clearly seen from the relational expression, the output wavelength of the monochromator is changed by controlling the rotation angle of the diffraction grating. Further, when a monochromatic light beam having a wavelength $\lambda 1$ is entered, a high order light beam $m\lambda 1$ of the diffraction grating appears at the different rotation angle $\theta 1'$, simultaneously with the light beam appearing at the angle $\theta 1$. The angle $\theta 1'$ is an angle corresponding to the wavelength of m times of the wavelength $\lambda 1$ of the light appearing at the angle of $\theta 1$. Refer to Fig. 3.

For example, when a light beam of a reference light source having the central wavelength at the wavelength $\lambda$ = 810.4364 nm is entered, the second order light (m = 2) of the diffraction grating simultaneously appears at the rotation angle corresponding to 1620.8728 nm.

That is, when the light beam of the reference light source having a wavelength $\lambda$ = 810.4364 nm is entered and the diffraction grating is rotated to a rotation angle corresponding to 1620. 8728 nm, the phenomena is the same as that the monochromator detects the light of the reference light source having the central wavelength at 1620. 8728 nm.

As described above, by utilizing the phenomenon that the diffraction light beam of the diffraction grating appears at higher orders to detect their wavelengths, a reference light source having light emission wavelengths, which does not exist in real, can be realized. By using the phenomenon, the wavelength calibration of the monochromator is performed.

A specific correction method will be described below.

In Fig. 1, numeral 1 is a reference light source to emit a reference light beam having a predetermined wavelength, numeral 2 is a measured light incident end into which a measured light is entered, numeral 3 is an optical switch into which the measured light and reference light are entered, and in which either one of the measured light or reference light is emitted from a light emission end, and numeral 4 is a monochromator which rotates a diffraction grating to an angle corresponding to the wavelength a the detection light beam and detects a light beam having the specific wavelength, and numeral 5 is an optical spectrum measuring apparatus which controls the optical switch 3 and the rotation angle of the diffraction grating in the monochromator 4, and measures the spectrum of the light.

Numeral 1 is, for example, a gas absorption cell as shown in Fig. 2, which absorbs a light beam having a specific wavelength. The gas absorption cell is very stable without depending on peripheral environments. Even when peripheral temperature changes, the center of the wavelength to be absorbed is constant.

Numeral 6 in Fig. 2 is a light source (for example, an LED or SLD) emitting a light beam having a wavelength band in the vicinity of 810 nm, numeral 7 is a lens to convert the emitted light from the light source into a parallel light beam, numeral 8 is a cell filled with Kr + Ne having an stable absorption wavelength band at 810. 4364nm, and numeral 9 is a lens converging a light beam penetrated through the cell 8.

The focal point of the lens 9 is set at one end of an optical fiber 10, and the optical fiber 10 is connected to the other light incident end of the optical switch 3.

Further, numeral 4 is a monochromator as shown in Fig. 4, which rotates the diffraction grating to an angle corresponding to the wavelength of the detection light beam, and detects the light beam having a specific wavelength. When the light beam is emitted from the light source 11, the emitted light beam enters into a incident slit 12. The light passed through the incident slit 12 is converted into the parallel light beam by a concave mirror 13, and enters into a diffraction grating 14. A rotation unit 15 rotates the diffraction grating 14 around a shaft parallel to many grooves formed on a surface of the diffraction grating 14, to have an arbitrary angle with respect to the parallel light beam. The arbitrary angle is determined by controlling the rotation unit 15.

The diffraction grating 14 spatially separates the incident parallel light beam for each wavelength. In the wavelength spatially separated by the diffraction grating 14, only the light beam having the wavelength determined by the angle formed between the parallel light and the diffraction grating is emitted to a concave mirror 16.

The concave mirror 16 image-forms only the light beam having the incident wavelength on an emitting slit 17. The light passed through the emitting slit is detected by a light detector 18.

An optical spectrum measuring apparatus 5 sets the wavelength passing though the emitting slit 17 by changing the angle of the diffraction grating, and analyzes an output detected by the light detector 18. The optical spectrum measuring apparatus 5 controls the rotation unit 15, and sweeps the wavelength passing through the emitting slit 17, and measures the optical spectrum.

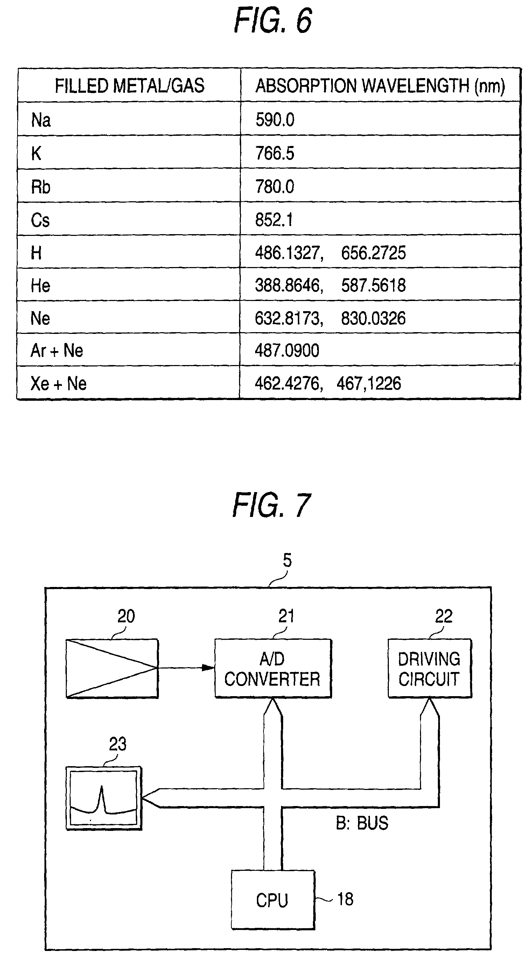

An example of the structure of the optical spectrum measuring apparatus is shown in Fig. 7. Numeral 20 is an amplifier for amplifying an electric signal outputted from the light detector 18 in the monochromator 4. Numeral 21 is an analog-to-digital converter (hereinafter, called A/D converter) for converting a value amplified by the amplifier 20 into a digital signal. Further, numeral 22 is a drive circuit for controling the rotation unit 15 in the monochromator 4, and controls the rotation operation of the rotation unit 15 corresponding to a control signal outputted from a CPU 19. Numeral 23 is a display apparatus, for example, such as a CRT (Cathode Ray Tube), or liquid crystal. The CPU 19 is connected to the A/D converter 21, the drive circuit 22, and the display apparatus 23 through a bus B. The CPU 19 outputs a control signal for controling the drive circuit 22, and a calculation is performed for the digital signal outputted fromtheA/D converter 21, and the display apparatus 23 displays the optical spectrum.

In the above structure, the wavelength calibration method of the present invention will be described below.

Initially, the optical spectrum measuring apparatus 5 outputs the control signal to the optical switch 3, so that the optical fiber 10 connected to the light incident end 2 is optically connected to the light emitting end of the optical switch 3. Thereby, the light beam emitted from the reference light source 1 enters into the monochromator 4. Although the absorption wavelength of the reference light source 1 is 810. 4364 nm, simultaneously, the absorption wavelength appears also at an angle corresponding to 1620.8728 nm as the second order light beam of the diffraction grating. When the wavelength calibration operation is conducted, in order to measure the second order light of the diffraction grating, the optical spectrum measuring apparatus 5 controls the rotation unit 15 and sweeps the vicinity of the wavelength 1620.8728 nm. The angle of the rotation unit 15 at this time is determined when the CPU 19 outputs the control signal corresponding to an angle of the second order light beam of the diffraction grating to the drive circuit 22. Thereby, the absorption wavelength of the second order light is detected. Then, a difference between the detected absorption wavelength and the wavelength 1620.8728 nm corresponding to the diffraction order of the absorption wavelength of the known reference light source is obtained. If the absorption wavelength deviates from the wave length of 1620.8728 nm, the rotation angle of the diffraction grating is corrected by an angle corresponding to the deviation wavelength, and the wavelength is calibrated.

When the above operations are completed, the control signal is outputted to the optical switch 3 by the optical spectrum measuring apparatus 5, and the measured light incident end and the light emitting end are optically connected to each other. Thereby, the light in the vicinity of the wavelength 1620 nm is entered from the measured light incident end, and when the wavelength measurement is conducted by the monochromator, the accurate wavelength measurement can be conducted.

As described above, by using the second order light of the diffraction grating, the reference light source having the absorption wavelength which does not actually exist, can be realized, and the wavelength calibration of the monochromator at the wavelength can be conducted.

Further, when the characteristic of the absorption wavelength is stable, the gas filled in the cell 8 is not limited. For example, gasses shown in the table in Fig. 6 are considered.

Further, herein, the second order light of the diffraction grating is described as an example, however, the present invention is not limited to only the second order light.

Further, herein, the correction method in which the measured light is measured by the first order light, and the reference light is measured by the second order light, is described as an example, however, for example, the wavelength calibration method in which the measured light is measured by the higher order light, and the reference light is measured by using the first order light, or the other high order light, may also be allowable.

Further, a zelnitana-type monochromator is described for as the monochromator. However, the structure of the monochromator is not limited to this type.

In the light absorption cell which is widely known as the reference light source for the wavelength calibration, its reference wavelength is limited.

In the present invention, the light of the reference light source such as the light absorption cell is entered into the monochromator, and by using the diffraction light of the different order from the diffraction order to measure the measured light, the wavelength of the reference light is measured, thereby, the wavelength calibration of the monochromator can be conducted by the further various wavelengths.

**Claims**

1. A wavelength calibration method comprising:

    introducing a reference light beam having a first wavelength component into a monochromator having a diffraction grating;
    diffracting the reference light beam on the diffraction grating to create a diffracted light beam having a second wavelength component different in diffraction order from the first wavelength component;
    measuring the second wavelength component of the diffraction light beam;
    obtaining a wavelength deviation between the second wavelength component of the diffracted light beam and a third wavelength component corresponding to the diffraction order of the diffracted light beam; and
    correcting a rotation angle of the diffraction grating by an angle corresponding to the wavelength deviation to correct a wavelength characteristic of the monochromator when the wavelength deviation exists.

2. The wavelength calibration method according to claim 1, further comprising:

    penetrating a light beam through a gas; and
    absorbing only the first reference wavelength component to create the reference light beam.

3. The wavelength calibration method according to claim 1, wherein the second wavelength component of the diffracted light beam is measured by rotating and sweeping the diffraction grating in the vicinity of an angle corresponding to the diffraction order of the diffracted light beam.

4. The wavelength calibration method according to claim 1, wherein the second wavelength component of the diffracted light beam is a second order light beam of the reference light beam diffracted by the diffaction grating.

5. A wavelength measuring method comprising:

    introducing a reference light beam having a first wavelength component into a monochromator having a diffraction grating;
    diffracting the reference light beam on the diffraction grating to create a diffracted light beam having a second wavelength component different in diffraction order from the first wavelength component;
    measuring the second wavelength component of the diffraction light beam;
    obtaining a wavelength deviation between the second wavelength component of the diffracted light beam and a third wavelength component corresponding to the diffraction order of the diffracted light beam;
    correcting a rotation angle of the diffraction grating by an angle corresponding to the wavelength deviation to correct a wavelength characteristic of the monochromator when the wavelength deviation exists;
    entering a measured light beam having a wavelength in the vicinity of the wavelength component corresponding to the diffraction order of the reference light beam; and
    detecting the wavelength of the measured light beam.

6. The wavelength measuring method according to claim 5, further comprising:

    penetrating a light beam through a gas; and
    absorbing only the first reference wavelength component to create the reference light beam.

7. The wavelength measuring method according to claim 5, wherein the second wavelength component of the diffracted light beam is measured by rotating and sweeping the diffraction grating in the vicinity of an angle corresponding to the diffraction order of the diffracted light beam.

8. The wavelength measuring method according to claim 5, wherein the second wavelength component of the diffracted light beam is a second order light beam of the reference light beam diffracted by the diffaction grating.

    entering a measured light beam having a wavelength in the vicinity of the wavelength component corresponding to the diffraction order of the reference light beam; and
    detecting the wavelength of the measured light beam.

9. A wavelength measuring apparatus comprising:

    a reference light source for emitting a reference light beam having a first wavelength component;

a measured light incident end for receiveing a measured light beam;

an optical switch for receiving the measured light beam and the reference light, the optical switch for emitting one of the measured light and the reference light to the monochromator;

a monochromator having a diffraction grating, the monochromator for rotating the diffraction grating to an angle corresponding to the wavelength component of the one of the measured light and the reference light to be detected; and

an optical spectrum measuring apparatus for controlling the optical switch and the rotation angle of the diffraction grating, the optical spectrum measuring apparatus for measuring the spectrum of the one of the measured light and the reference light;

wherein the optical spectrum measuring apparatus includes a wavelength calibration section for measuring the diffracted light beam having a wavelength component different in diffraction order from the wavelength component of the reference light beam and being diffracted on the diffraction grating; and

the wavelength calibration section corrects a wavelength characteristic of the monochromator on the basis of a wavelength deviation between the wavelength component of the diffracted light beam and a wavelength component corresponding to the diffraction order of the diffracted light beam.

10. The wavelength measuring apparatus according to Claim 9, wherein the reference light source comprises:

a light source for emitting a light beam having a predetermined wavelength band; and
a gas absorption cell filled with a gas having a characteristic to absorb only a specific wavelength component from the light beam.

11. The wavelength measuring apparatus according to Claim 10, wherein the reference light sourch comprises:

a lens for making the light beam parallel at the incident end of the gas absorption cell; and
a convergion lens for converting the light beam at the emitting end of the gas absorption cell.

*FIG. 1*

2

3

OPTICAL
SWITCH

MONOCHROMATOR — 4

1

OPTICAL SPECTRUM
MEASURING APPARATUS — 5

*FIG. 2*

6          7        8        9                10

LIGHT
SOURCE

*FIG. 3*

INCIDENT LIGHT
(λa ~ λb)

0 ORDER
LIGHT

+2ND ORDER
LIGHT

+1ST ORDER
LIGHT

λb          λa        λa

+3RD ORDER
LIGHT

λb              λa

-1ST ORDER
LIGHT

-2ND ORDER
LIGHT

-3RD ORDER
LIGHT

*FIG. 4*

OPTICAL SPECTRUM
MEASURING APPARATUS

*FIG. 5*

## FIG. 6

| FILLED METAL/GAS | ABSORPTION WAVELENGTH (nm) |
|---|---|
| Na | 590.0 |
| K | 766.5 |
| Rb | 780.0 |
| Cs | 852.1 |
| H | 486.1327, 656.2725 |
| He | 388.8646, 587.5618 |
| Ne | 632.8173, 830.0326 |
| Ar + Ne | 487.0900 |
| Xe + Ne | 462.4276, 467,1226 |

## FIG. 7